# EUROPÄISCHE PATENTSCHRIFT

(11) **EP 1 907 323 B1**
(45) Veröffentlichungstag und Bekanntmachung des Hinweises auf die Patenterteilung: **25.04.2018**
(21) Anmeldenummer: 06776216.1
(22) Anmeldetag: 13.07.2006
(51) Int. Cl.: C01F 7/30, B82Y 30/00

(54) **VERFAHREN ZUR HERSTELLUNG VON NANOPARTIKELN AUS ALUMINIUMOXID UND OXIDEN VON ELEMENTEN DER I. UND II. HAUPTGRUPPE DES PERIODENSYSTEMS**
PROCESS FOR THE PREPARATION OF NANOPARTICLES OF ALUMINA AND OXIDES OF ELEMENTS OF MAIN GROUPS I AND II OF THE PERIODIC TABLE
PROCÉDÉ DE FABRICATION DE NANOPARTICULES COMPOSEES D'OXYDE D'ALUMINIUM ET D'OXYDES D'ELEMENTS DU PREMIER ET DU DEUXIEME GROUPE PRINCIPAL DU TABLEAU PERIODIQUE

(30) Priorität: 16.07.2005 DE 102005033393; 18.08.2005 DE 102005039435; 18.08.2005 DE 102005039436; 17.03.2006 DE 102006012319; 29.04.2006 DE 102006020515
(43) Veröffentlichungstag der Anmeldung: 09.04.2008
(73) Patentinhaber: Archroma IP GmbH, 4153 Reinach (CH)
(72) Erfinder: RÖSCH, Norbert, 86368 Gersthofen (DE); KRENDLINGER,Ernst, 86316 Friedberg (DE); HEINZE, Anja, 65239 Hochheim/main (DE); ZEISBERGER, Karl, 86368 Gersthofen (DE); KLUG, Peter, 63762 Grossostheim (DE); SIMSCH, Waltraud, 65779 Kelkheim (DE)
(74) Vertreter: Ricker, Mathias
(86) Internationale Anmeldenummer: PCT/EP2006/006853
(87) Internationale Veröffentlichungsnummer: WO 2007/009658

(56) Entgegenhaltungen:
- EP-A- 0 524 519
- EP-A2- 0 441 640
- WO-A-03/031333
- WO-A1-03/029145
- GB-A- 2 184 715
- MONCEAU D ET AL: "Surface Segregation and Morphology of Mg-Doped alpha-Alumina Powders" JOURNAL OF THE EUROPEAN CERAMIC SOCIETY, ELSEVIER SCIENCE PUBLISHERS, BARKING, ESSEX, GB, Bd. 15, Nr. 9, 1995, Seiten 851-858, XP004047319 ISSN: 0955-2219
- OBERBACH, T.; GUENTHER, C.; WERNER, G.; TOMANDL, G.: "Methods for producing corundum at low temperatures" CFI - CERAMIC FORUM INTERNATIONAL, Bd. 74, Nr. 11/12, 1997, Seiten 719-722, XP009072528 Bauverlag GmbH in der Anmeldung erwähnt

## Beschreibung

Die vorliegende Erfindung betrifft Nanopartikel sowie deren Herstellung, wobei die Nanopartikel aus Al₂O₃ mit Anteilen von Oxiden der Elemente der I. und II. Hauptgruppe des Periodensystems bestehen.

Feine Aluminiumoxidpulver werden insbesondere für keramische Anwendungen, zur Matrixverstärkung organischer oder metallischer Schichten, als Füllstoffe, Polierpulver, für die Herstellung von Schleifmittel, als Additive in Lacken und Laminaten sowie für weitere Spezialanwendungen eingesetzt.

Die Herstellung der ultra-feinen Aluminiumoxidpulver erfolgt entweder durch chemische Synthese, mechanische Zerkleinerungsverfahren oder auf thermophysikalischem Weg.

Die Nachteile der Verfahren nach dem bekannten Stand der Technik bestehen darin, dass die Ausbeuten pro Zeit aufgrund der langen Kalzinierungszeiten gering sind oder das Produkt im Fall der Mahlung verunreinigt und noch zu grob ist.

Ziel der vorliegenden Erfindung ist es deshalb nano-kristalline Mischoxide, bestehend aus Aluminiumoxid und Metalloxiden von Elementen der I. und II. Hauptgruppe des Periodensytsems mit einem Verfahren herzustellen, das hohe Ausbeuten in kurzer Zeit bei minimaler Energiezufuhr liefert. Das dabei erzeugte Produkt sollte mit einfachen Mitteln redispergierbar sein und damit stabile nano-Suspensionen liefern können.

Entgegen den bisher bekannten Aussagen verschiedener Autoren (Ber. DKG 74 (1997) No. 11/12; DE 199 22 492) kann diese Aufgabe ausgehend von Aluminiumchlorohydrat (Aluminiumhydroxychlorid) gelöst werden.

Überraschend wurde nun gefunden, dass sich die Mischoxide aus Al₂O₃, mit einem Gehalt an Oxiden von Elementen aus der ersten und zweiten Hauptgruppe des Periodensystems dadurch auszeichnen, dass die Nanopartikel in besonders feiner Form gebildet werden. Außerdem hat sich gezeigt, dass die hergestellten Pulver sehr weiche Agglomerate enthalten, die ohne Probleme bei Einbringen der Mischoxide in geeignete Lösungsmittel unter moderater Energiezufuhr zerstört werden können.

Gegenstand der Erfindung ist ein Verfahren zur Herstellung von Nanopartikeln bestehend aus 50 - 99,99 Gew.-% Aluminiumoxid und 0,01 - 50Gew.-% Oxiden von Elementen der I. oder II. Hauptgruppe des Periodensystems. Das Aluminiumoxid in diesen Mischoxiden liegt bevorzugt zum überwiegenden Teil in der rhomboedrischen α-Modifikation (Korund) vor. Dementsprechend darf der Anteil dieser Mischoxide der I. oder II. Hauptgruppe nur so bemessen sein, dass das Korundgitter dem beanspruchten Nanopartikel erhalten bleibt. Die Mischoxide gemäß der vorliegenden Erfindung haben vorzugsweise eine Kristallitgröße von kleiner 1 µm, bevorzugt kleiner 0,2 µm und besonders bevorzugt zwischen 0,001 und 0,09 µm. Erfindungsgemäße Partikel dieser Größenordnung sollen im folgenden als Nanopartikel bezeichnet werden.

Mischoxide können nach unterschiedlichen, im Folgenden beschriebenen Verfahren hergestellt werden. Diese Verfahrensbeschreibungen beziehen sich auf die Herstellung nur von reinen Aluminiumoxid-Partikeln, es versteht sich aber von selbst, dass bei all diesen Verfahrensvarianten neben Al-enthaltenden Ausgangsverbindungen auch solche Verbindungen aus Elementen der I. oder II. Hauptgruppe des Periodensystems anwesend sein müssen, um die erfindungsgemäßen Mischoxide zu bilden. Hierfür kommen vor allem infrage vorzugsweise die Chloride, aber auch die Oxide, Oxidchloride, Carbonate, Sulfate oder andere geeignete Salze. Die Menge an solchen Oxidbildnern ist so bemessen, dass die fertigen Nanopartikel die zuvor genannten Mengen an Oxid MeO enthalten. Als Oxid MeO kommt im Rahmen der vorliegenden Erfindung vorzugsweise MgO und CaO in Frage.

Ganz allgemein geht man bei der Herstellung der Nanopartikel von größeren Agglomeraten dieser Mischoxide aus, die anschließend auf die gewünschte Partikelgröße desagglomeriert werden. Diese Agglomerate können hergestellt werden durch nachfolgend beschriebene Verfahren.

Solche Agglomerate lassen sich beispielsweise durch verschiedene chemische Synthesen herstellen. Hierbei handelt es sich meist um Fällungsreaktionen (Hydroxidfällung, Hydrolyse metallorganischer Verbindungen) mit anschließender Kalzinierung. Dabei werden häufig Kristallisationskeime zugesetzt, um die Umwandlungstemperatur zum oc-Aluminiumoxid herabzusetzen. Die so erhaltenen Sole werden getrocknet und dabei in ein Gel überführt. Die weitere Kalzinierung findet dann bei Temperaturen zwischen 250°C und 650°C statt. Für die Umwandlung zum α-Al₂O₃ muss dann bei Temperaturen um 1000°C geglüht werden. Die Verfahren sind ausführlich in DE 199 22 492 beschrieben.

Ein weiterer Weg ist das Aerosolverfahren. Dabei werden die gewünschten Moleküle aus chemischen Reaktionen eines Precursorgases oder durch schnelle Abkühlung eines übersättigten Gases erhalten. Die Bildung der Partikel erfolgt entweder durch Kollision oder die ständige im Gleichgewicht befindliche Verdampfung und Kondensation von Molekülclustern. Die neu gebildeten Teilchen wachsen durch weitere Kollision mit Produktmolekülen (Kondensation) und/oder Partikeln (Koagulation). Ist die Koagulationsrate größer als jene der Neubildung bzw. des Wachstums, entstehen Agglomerate von kugelförmigen Primärpartikeln. Flammenreaktoren stellen eine auf diesem Prinzip basierende Herstellungsvariante dar. Nanopartikel werden hier durch die Zersetzung von Precursormolekülen in der Flamme bei 1500 °C - 2500 °C gebildet. Als Beispiele seien die Oxidationen von TiCl₄; SICl₄ und Si₂O(CH₃)₆ in Methan/O₂-Flammen erwähnt, die zu TiO₂-und SiO₂-Partikeln führen. Bei Einsatz von AlCl₃ konnte bislang nur die entsprechende Tonerde erzeugt werden. Flammenreaktoren werden heute großtechnisch für die Synthese von Submikropartikeln wie Ruß, Pigment-TiO2, Kieselsäure und Tonerde eingesetzt.

Kleine Partikel können auch mit Hilfe von Fliehkraft, Druckluft, Schall, Ultraschall und weiteren Methoden auch aus Tropfen gebildet werden. Die Tropfen werden dann durch direkte Pyrolyse oder durch in situ Reaktionen mit anderen Gasen in Pulver umgewandelt. Als bekannte Verfahren sind die Sprüh- und Gefriertrocknung zu erwähnen. Bei der Spraypyrolyse werden Precursortropfen durch ein Hochtemperaturfeld (Flamme, Ofen) transportiert, was zu einer raschen Verdampfung der leicht flüchtigen Komponente führt oder die Zersetzungsreaktion zum gewünschten Produkt initiiert. Die gewünschten Partikel werden in Filtern gesammelt. Als Beispiel kann hier die Herstellung von BaTiO₃ aus einer wässrigen Lösung von Bariumacetat und Titanlactat genannt werden.

Durch Mahlung kann ebenfalls versucht werden, Korund zu zerkleinern und dabei Kristallite im nano-Bereich zu erzeugen. Die besten Mahlergebnisse können mit Rührwerkskugelmühlen in einer Nassmahlung erzielt werden. Dabei müssen Mahlperlen aus einem Material verwendet werden, das eine größere Härte als Korund hat.

Ein weiterer Weg zur Herstellung von Korund bei niedriger Temperatur stellt die Umwandlung von Aluminiumchlorohydrat dar. Dieses wird dazu ebenfalls mit Impfkeimen, bevorzugt aus Feinstkorund oder Hämatit, versetzt. Zur Vermeidung von Kristallwachstum müssen die Proben bei Temperaturen um 700°C bis maximal 900°C kaliziniert werden. Die Dauer der Kalzinierung beträgt hierbei mindestens vier Stunden. Nachteil dieser Methode ist deshalb der große Zeitaufwand und die Restmengen an Chlor im Aluminiumoxid. Die Methode wurde ausführlich beschrieben in Ber. DKG 74 (1997) No. 11/12, S. 719 - 722.

Aus diesen Agglomeraten müssen die Nanopartikel freigesetzt werden. Dies geschieht vorzugsweise durch Mahlen oder durch Behandlung mit Ultraschall. Erfindungsgemäß erfolgt diese Desagglomeration in Gegenwart eines Lösungsmittels und eines-Beschichtungsmittels, bevorzugt eines Silans, das während des Mahlprozesses die entstehenden aktiven und reaktiven Oberflächen durch eine chemische Reaktion oder physikalische Anlagerung absättigt und somit die Reagglomeration verhindert. Das nano-Mischoxid bleibt als kleines Partikel erhalten. Es ist auch möglich, das Beschichtungsmittel nach erfolgter Desagglomeration zuzugeben.

Vorzugsweise geht man bei der erfindungsgemäßen Herstellung der Mischoxide von Agglomeraten aus, die entsprechend den Angaben in Ber. DKG 74 (1997) No. 11/12, S. 719 - 722 hergestellt werden, wie zuvor beschrieben.
Ausgangspunkt hierbei ist Aluminiumchlorohydrat, dem die Formel Al₂(OH)ₓCl_{y} zukommt, wobei x eine Zahl von 2,5 bis 5,5 und y eine Zahl von 3,5 und 0,5 ist und die Summe von x und y stets 6 beträgt. Dieses Aluminiumchlorohydrat wird als wässrige Lösung mit Kristallisationskeimen vermischt, anschließend getrocknet und dann einer thermischen Behandlung (Kalzinierung) unterzogen.

Bevorzugt geht man dabei von 50 %igen wässrigen Lösungen aus, wie sie kommerziell verfügbar sind. Eine solche Lösung wird mit Kristallisationskeimen versetzt, die die Bildung der α-Modifikation des Al₂O₃ fördern. Insbesondere bewirken solche Keime eine Herabsetzung der Temperatur für die Bildung der α-Modifikation bei der nachfolgenden thermischen Behandlung. Als Keime kommen bevorzugt infrage feinstdisperser Korund, Diaspor oder Hämatit. Besonders bevorzugt nimmt man feinstdisperse α- Al₂O₃-Keime mit einer mittleren Teilchengröße von weniger als 0,1 µm. Im Allgemeinen reichen 2 bis 3 Gew.-% an Keimen bezogen auf das entstehende Aluminiumoxid aus.

Diese Ausgangslösung enthält zusätzlich noch Oxidbildner, um die Oxide MeO in dem Mischoxid zu erzeugen. Hierfür kommen vor allem infrage die Chloride der Elemente der I. und II. Hauptgruppe des Periodensystems, insbesondere die Chloride der Elemente Ca und Mg, aber darüber hinaus auch andere lösliche oder dispergierbare Salze wie Oxide, Oxichloride, Carbonate oder Sulfate. Die Menge an Oxidbildner ist so bemessen, dass die fertigen Nanopartikel 0,01 bis 50 Gew.-% des Oxids Me enthalten. Die Oxide der I. und II. Hauptgruppe können als separate Phase neben dem Aluminiumoxid vorliegen oder mit diesem echte Mischoxide wie z.B. Spinelle etc. bilden. Der Begriff "Mischoxide" im Rahmen dieser Erfindung ist so zu verstehen, dass er beide Typen mit einschließt.

Diese Suspension aus Aluminiumchlorohydrat, Keimen und Oxidbildnern wird dann bis zum Trocknen eingedampft und einer thermischen Behandlung (Kalzinierung) unterworfen. Diese Kalzinierung erfolgt in hierfür geeigneten Vorrichtungen, beispielsweise in Durchschub-, Kammer-, Rohr-, Drehrohr- oder Mikrowellenöfen oder in einem Wirbelschichtreaktor. Gemäß einer Variante des erfindungsgemäßen Verfahrens kann man auch so vorgehen, dass man die wässrige Suspension aus Aluminiumchlorohydrat, Oxidbildnern und Keimen ohne vorherige Entfernung des Wassers direkt in die Kalzinierungsapparatur einspritzt.

Die Temperatur für die Kalzinierung soll 1400°C nicht übersteigen. Die untere Temperaturgrenze ist abhängig von der gewünschten Ausbeute an nanokristallinem Mischoxid, vom gewünschten Restchlorgehalt und dem Gehalt an Keimen. Die Bildung der Nanopartikel setzt bereits ber ca. 500°C ein, um jedoch den Chlorgehalt niedrig und die Ausbeute an Nanopartikeln hoch zu halten, wird man jedoch bevorzugt bei 700 bis 1100°C, insbesondere bei 1000 bis 1100°C arbeiten.

Es hat sich überraschend herausgestellt, dass für die Kalzinierung im Allgemeinen weniger als 0,5 bis 30 Minuten, vorzugsweise 0,5 bis 10, insbesondere 2 bis 5 Minuten ausreichen. Bereits nach dieser kurzen Zeit kann unter den oben angegebenen Bedingungen für die bevorzugten Temperaturen eine ausreichende Ausbeute an Nanopartikeln erreicht werden. Man kann jedoch auch entsprechend den Angaben in Ber. DKG 74 (1997) No. 11/12, S. 722 4 Stunden lang bei 700°C oder 8 Stunden lang bei 500°C kalzinieren.

Bei der Kalzinierung fallen Agglomerate in Form von nahezu kugelförmigen Nanopartikeln an. Diese Partikel bestehen aus Al₂O₃ und MeO. Der Gehalt an MeO wirkt als Inhibitor für das Kristallwachstum und hält die Kristallitgröße klein. Dadurch unterscheiden sich die anfallenden Nanopartikel, wie sie durch die oben beschriebene Kalzinierung erhalten werden, deutlich von den Partikeln, wie sie bei den in DE 199 22 492; WO 2004/089827 und WO 02/08124 beschriebenen Verfahren erzielt werden.

Zur Gewinnung von Nanopartikeln werden die Agglomerate vorzugsweise durch Nassmahlung in einem Lösungsmittel zerkleinert, beispielsweise in einer Attritormühle, Perlmühle oder Rührwerksmühle. Dabei erhält man Nanopartikel, die eine Kristallitgröße von kleiner 1 µm, bevorzugt kleiner 0,2 µm, besonders bevorzugt zwischen 0,001 und 0,9 µm aufweisen. Auch hier zeigt das beschriebene Verfahren deutliche Vorteile, da die erfindungsgemäß hergestellten Mischoxide deutlich weichere Agglomerate bilden, was sich positiv auf die für die Desagglomeration benötigte Zeit und den Verschleiß in der Mühle auswirkt. So erhält man beispielsweise nach einer sechsstündigen Mahlung eine Suspension von Nanopartikeln mit einem d90-Wert von ungefähr 50 nm. Eine andere Möglichkeit der Desagglomeration ist die Anwendung von Ultraschall.

Als Lösungsmittel für die Desagglomeration kommen in Frage sowohl Wasser als auch Alkohole und sonstige polare Lösungsmittel, die in der Lage sind, die freigesetzten Nanopartikel stabil aufzunehmen. Erfolgt die Desagglomeration in Wasser, sollte eine anorganische oder organische Säure, beispielsweise HCl, HNO₃, Ameisensäure oder Essigsäure zugegeben werden, um die entstehenden Nanopartikel in der wässrigen Suspension zu stabilisieren. Die Menge an Säure kann 0,1 bis 5 Gew.-%, bezogen auf das Mischoxid, betragen. Eine weitere Möglichkeit besteht darin, die Nanopartikel durch Zugabe von Acrylaten, Polyethylenglykolen, geringen Mengen Silan oder sonstigen Oberflächen aktiven Substanzen sterisch zu stabilisieren. Bei dieser Art der Stabilisierung werden die Nanopartikel abgeschirmt und damit der starken Anziehungskraft zwischen den Partikeln entgegengewirkt. Aus dieser Suspension kann dann bevorzugt die Kornfraktion mit einem Teilchendurchmesser von weniger als 20 nm durch Zentrifugieren abgetrennt werden. Die so erhaltenen feinen Fraktionen können dann durch Trocknung, wie z.B. durch Gefriertrocknung, in leicht redispergierbare Nanopulver überführt werden.

Die Desagglomerierung durch Mahlen oder Zufuhr von Ultraschallenergie erfolgt vorzugsweise bei Temperaturen von 20 bis 100°C, besonders bevorzugt bei 20 bis 90°C.

### Beispiele:

### Beispiel 1:

Eine 50 %ig wässrige Lösung von Aluminiumchlorohydrat wurde mit Magnesiumchlorid versetzt, dass nach der Kalzinierung das Verhältnis von Aluminiumoxid zu Magnesiumoxid 99,5 : 0,5 % betrug. Außerdem wurden der Lösung 2 % Kristallisationskeime einer Suspension aus Feinstkorund zugesetzt. Nachdem die Lösung durch Rühren homogenisiert wurde, erfolgte die Trocknung in einem Rotationsverdampfer. Das feste Aluminiumchlorohydrat-Magnesiumchlorid-Gemisch wurde in einer Reibschale zerkleinert, wobei ein grobes Pulver entstand.

Das Pulver wurde in einem Drehrohrofen bei 1050°C kalziniert. Die Kontaktzeit in der heißen Zone betrug maximal 5 min. Es wurde ein weißes Pulver erhalten, dessen Kornverteilung dem Aufgabegut entsprach.

Eine Röntgenstrukturanalyse zeigt, dass überwiegend α-Aluminiumoxid vorliegt. Die Bilder der durchgeführten REM-Aufnahme (Rasterelektronenmikroskop) zeigten Kristallite im Bereich 10 - 80 nm (Abschätzung aus REM-Aufnahme), die als Agglomerate vorliegen. Der Restchlorgehalt betrug nur wenige ppm.

In einem weiteren Schritt wurden 40 g dieses mit Magnesiumoxid dotierten Korundpulvers in 160 g Wasser suspendiert. Die Suspension wurde in einer vertikalen Rührwerkskugelmühle der Fa. Netzsch (Typ PE 075) desagglomeriert. Die eingesetzten Mahlperlen bestanden aus Zirkoniumoxid (stabilisiert mit Yttrium) und wiesen eine Größe von 0,3 mm auf. Der pH-Wert der Suspension wurde alle 30 min kontrolliert und durch Zugabe von verdünnter Salpetersäure auf pH 4 - 4,5 gehalten. Nach 6 Stunden wurde die Suspension von den Mahlperlen abgetrennt und mit Hilfe einer analytischen Scheibenzentrifuge der Fa. Brookhaven bezüglich Kornverteilung charakterisiert. Es wurde dabei ein d90 von 54 nm, ein d50 von 42 nm und ein d10 von 22 nm gefunden. Die Nanosuspension aus den Mischoxiden ist damit deutlich feiner als Vergleichbare Suspensionen aus reinem α-Aluminiumoxid.

### Beispiel 2:

Eine 50 %ig wässrige Lösung von Aluminiumchlorohydrat wurde mit Calciumchlorid versetzt, dass nach der Kalzinierung das Verhältnis von Aluminiumoxid zu Calciumoxid 99,5 : 0,5 % beträgt. Außerdem werden der Lösung 2 % Kristallisationskeime einer Suspension aus Feinstkorund zugesetzt. Nachdem die Lösung durch Rühren homogenisiert wurde, erfolgt die Trocknung in einem Rotationsverdampfer. Das feste Aluminiumchlorohydrat-Calciummchlorid-Gemisch wurde in einer Reibschale zerkleinert, wobei ein grobes Pulver entstand.

Das Pulver wurde in einem Drehrohrofen bei 1050°C kalziniert. Die Kontaktzeit in der heißen Zone betrug maximal 5 min. Es wurde ein weißes Pulver erhalten, dessen Kornverteilung dem Aufgabegut entsprach.

Eine Röntgenstrukturanalyse zeigt, dass überwiegend α-Aluminiumoxid vorliegt.

Die Bilder der durchgeführten REM-Aufnahme (Rasterelektronenmikroskop) zeigten Kristallite im Bereich 10 - 80 nm (Abschätzung aus REM-Aufnahme), die als Agglomerate vorliegen. Der Restchlorgehalt betrug nur wenige ppm.

In einem weiteren Schritt wurden 40 g dieses mit Calciumoxid dotierten Korundpulvers in 160 g Wasser suspendiert. Die Suspension wurde in einer vertikalen Rührwerkskugelmühle der Fa. Netzsch (Typ PE 075) desagglomeriert. Die eingesetzten Mahlperlen bestanden aus Zirkoniumoxid (stabilisiert mit Yttrium) und wiesen eine Größe von 0,3 mm auf. Der pH-Wert der Suspension wurde alle 30 min kontrolliert und durch Zugabe von verdünnter Salpetersäure auf pH 4 - 4,5 gehälten. Nach 6 Stunden wurde die Suspension von den Mahlperlen abgetrennt und mit Hilfe einer analytischen Scheibenzentrifuge der Fa. Brookhaven bezüglich Kornverteilung charakterisiert. Es wurde dabei ein d90 von 77 nm, ein d50 von 55nm und ein d10 von 25 nm gefunden. Die Nanosuspension aus den Mischoxiden ist damit deutlich feiner als Vergleichbare Suspensionen aus reinem α-Aluminiumoxid.

## Patentansprüche

1. Verfahren zur Herstellung von Nanopartikeln bestehend aus 50 - 99,99% Aluminiumoxid in überwiegend rhomboedrischer α-Modifikation und 0,01 - 50 Gew.% Metalloxid der I. oder II. Hauptgruppe des Periodensystems, **dadurch gekennzeichnet, dass** man Aluminiumchlorohydrat mit Keimen und Oxidbildnern aus Elementen der I. und II. Hauptgruppe des Periodensystems versetzt, innerhalb von 0,5 bis 30 Minuten lang thermisch behandelt und die dabei erhaltenen Agglomerate zerkleinert.

2. Verfahren zur Herstellung von Nanopartikeln nach Anspruch 1, **dadurch gekennzeichnet, dass** die Nanopartikel Kristallitgrößen von kleiner 1 µm, bevorzugt kleiner 0,2 µm, besonders bevorzugt zwischen 0,001 und 0,09 µm aufweisen.

3. Verfahren nach Anspruch 1 oder 2, **dadurch gekennzeichnet, dass** als Aluminiumchlorohydrat eine Verbindung mit der chemischen Formel Al₂(OH)ₓCl_{y} eingesetzt wird, wobei x eine Zahl zwischen 2,5 und 5,5 und y eine Zahl zwischen 3,5 und 0,5 ist, wobei die Summe x+y stets 6 beträgt.

4. Verfahren nach den Ansprüchen 1 bis 3, **dadurch gekennzeichnet, dass** als Kristallisationskeime feinstdisperser α-Al₂O₃, Hämatit oder Diaspor verwendet wird.

5. Verfahren nach den Ansprüchen 1 bis 4, **dadurch gekennzeichnet, dass** die eingesetzten feinstdispersen α-Al₂O₃-Keime eine mittlere Teilchengröße von weniger als 0,1 µm aufweisen.

6. Verfahren nach den Ansprüchen 1 bis 5, **dadurch gekennzeichnet, dass** man die Suspension aus Aluminiumchlorohydrat plus Kristallisationskeime plus Oxidbildner zunächst trocknet und das getrocknete Produkt anschließend kalziniert.

7. Verfahren nach den Ansprüchen 1 bis 6, **dadurch gekennzeichnet, dass** man die Kalzinierung in einem Durchschub-, Kammer-, Rohr-, Drehrohr- oder Mikrowellenofen oder in einem Wirbelschichtreaktor durchführt.

8. Verfahren nach den Ansprüchen 1 bis 7, **dadurch gekennzeichnet, dass** man die Kalzinierung bei Temperaturen unterhalb 1100°C durchführt.

9. Verfahren nach den Ansprüchen 1 bis 8, **dadurch gekennzeichnet, dass** man die Kalzinierung bei 700 bis 1100°C durchführt.

10. Verfahren nach den Ansprüchen 1 bis 6, 8 **dadurch gekennzeichnet, dass** man die wässrige Suspension aus Aluminiumchlorohydrat und Keimen ohne vorherige Entfernung des Wassers direkt in die
Kalzinierungsapparatur einspritzt.

11. Verfahren nach den Ansprüchen 1 bis 10, **dadurch gekennzeichnet, dass** man die thermische Behandlung innerhalb von 0,5 bis 10, insbesondere 2 bis 5 Minuten durchführt.

12. Verfahren gemäß den Ansprüchen 1 bis 11, **dadurch gekennzeichnet, dass** man die bei der thermischen Behandlungs-Reaktion gebildeten Agglomerate in einem anschließenden Schritt durch eine Nass- oder Trockenmahlung zerkleinert werden.

13. Verfahren gemäß den Ansprüchen 1 bis 12, **dadurch gekennzeichnet, dass** man die Agglomerate durch Ultraschall zerstört.

14. Verfahren nach den Ansprüche 1, 2, 12, 13, **dadurch gekennzeichnet, dass** man die Agglomerate bei 20 bis 90°C desagglomeriert.

15. Verfahren gemäß den Ansprüchen 1, 2, 12, 13, 14, **dadurch gekennzeichnet, dass** die bei der Desagglomeration erhaltenen Suspensionen durch Sprühtrocknung, Gefriertrocknung oder sonstige Trocknungsverfahren in ein Pulver mit weichen Agglomeraten überführt wird.

16. Verfahren gemäß den Ansprüchen 1, 2, 13, 14, 15, **dadurch gekennzeichnet, dass** die bei der Desagglomeration erhaltenen Suspensionen zentrifugiert und die klaren bis leicht opaleszenten Überstände mit Nanopartikeln < 20 nm abgetrennt werden.

17. Verfahren gemäß Anspruch 16, **dadurch gekennzeichnet, dass** die nach der Zentrifugation erhaltenen Suspensionen mit Nanopartikeln < 20 nm getrocknet werden durch Sprühtrocknung, Gefriertrocknung oder sonstige Trocknungsverfahren und dabei ein leicht redispergierbares Pulver gebildet wird.

## Claims

1. Process for the preparation of nanoparticles consisting of 50-99.99% aluminum oxide in predominantly rhombohedral α-modification and 0.01-50% by weight of metal oxide of main groups I or II of the periodic table, **characterized in that** crystallization nuclei and oxide formers of elements of main groups I and II of the periodic table are added to aluminum chlorohydrate, thermally treating within 0.5 to 30 minutes and comminuting the thereby obtained agglomerates.

2. Process for the preparation of nanoparticles according to claim 1, wherein the nanoparticles have crystallite sizes of less than 1 µm, preferably less than 0.2 µm, more preferably between 0.001 and 0.09 µm.

3. Process according to claims 1 or 2, **characterized in that** as aluminum chlorohydrate a compound of the chemical formula Al₂(OH)ₓCl_{y} is used, wherein x is a number of between 2.5 and 5.5, and y is a number of between 3.5 and 0.5, wherein the sum of x + y is always 6.

4. Process according to claims 1 to 3, **characterized in that** as crystallization nuclei very finely dispersed α-Al₂O₃, hematite or diaspore is used.

5. Process according to claims 1 to 4, **characterized in that** the used very finely dispersed α-Al₂O₃ crystallization nuclei have a mean particle size of less than 0.1 µm.

6. Process according to claims 1 to 5, **characterized in that** the suspension of aluminum chlorohydrate plus crystallization nuclei plus oxide formers is first dried and the dried product is then calcined.

7. Process according to claims 1 to 6, **characterized in that** the calcination is carried out in a sliding-bat furnace, chamber furnace, tube furnace, rotary kiln, microwave oven, or in a fluidized-bed reactor.

8. Process according to claims 1 to 7, **characterized in that** the calcination is carried out at temperatures below 1100°C.

9. Process according to claims 1 to 8, **characterized in that** the calcination is carried out at 700 to 1100°C.

10. Process according to claims 1 to 6, 8, **characterized in that** the aqueous suspension of aluminum chlorohydrate and nuclei is injected directly into the calcination apparatus without prior removal of the water.

11. Process according to claims 1 to 10, **characterized in that** the thermal treatment is carried out within 0.5 to 10, preferably within 2 to 5 minutes.

12. Process according to claims 1 to 11, **characterized in that** the agglomerates formed in the thermal treatment reaction are comminuted in a subsequent step by wet or dry milling.

13. Process according to claims 1 to 12, **characterized in that in that** the agglomerates are destroyed by ultrasound.

14. Process according to claims 1, 2, 12, 13, **characterized in that** the agglomerates are comminuted at 20 to 90 °C.

15. Process according to claims 1, 2, 12, 13, 14, **characterized in that** the suspensions obtained by desagglomeration are converted into a powder with soft agglomerates by spray-drying, freeze-drying or other drying methods.

16. Process according to claims 1, 2, 13, 14, 15, **characterized in that** the suspensions obtained by desagglomeration are centrifuged and the clear to slightly opalescent supernatants comprising nanoparticles < 20 nm are separated.

17. Process according to claim 16, **characterized in that** the suspensions comprising nanoparticles < 20 nm obtained after centrifugation are dried by spray-drying, freeze-drying or other drying methods and a readily redispersible powder is formed thereby.

## Revendications

1. Procédé de fabrication de nanoparticules constituées de 50 à 99,99 % d'oxyde d'aluminium, essentiellement selon la variété α rhomboédrique, et de 0,01 à 50 % en poids de l'oxyde d'un métal du premier du Ier ou du IIème Groupe Principal du Système Périodique, **caractérisé en ce qu'**on ajoute à du chlorhydrate d'aluminium des germes et des générateurs d'oxydes à partir d'éléments du Ier et du IIème Groupe Principal du Système Périodique, on soumet à un traitement thermique en 0,5 à 30 minutes, et on broie les agglomérats ainsi obtenus.

2. Procédé de fabrication de nanoparticules selon la revendication 1, **caractérisé en ce que** les nanoparticules présentent des grosseurs de cristallites inférieures à 1 µm, de préférence inférieures à 0,2 µm, d'une manière particulièrement préférée comprises entre 0,001 et 0,09 µm.

3. Procédé selon la revendication 1 ou 2, **caractérisé en ce qu'**on utilise en tant que chlorhydrate d'aluminium un composé de formule chimique Al₂(OH)ₓCl_{y}, x étant un nombre compris entre 2,5 et 5,5, et y étant un nombre compris entre 3,5 et 0,5, la somme x+y étant toujours égale à 6.

4. Procédé selon les revendications 1 à 3, **caractérisé en ce qu'**on utilise en tant que germes de cristallisation de l'α-Al₂O₃ très finement dispersé, de l'hépatite ou du diaspore.

5. Procédé selon les revendications 1 à 4, **caractérisé en ce que** les germes d'α-Al₂O₃ très finement dispersés utilisés présentent une granulométrie moyenne inférieure à 0,1 µm.

6. Procédé selon les revendications 1 à 5, **caractérisé en ce qu'**on sèche d'abord la suspension de chlorhydrate d'aluminium additionnée de germes de cristallisation et de générateurs d'oxydes, puis on calcine le produit séché.

7. Procédé selon les revendications 1 à 6, **caractérisé en ce qu'**on met en oeuvre la calcination dans un four à dalles glissantes, dans un four à moufles, dans un four tubulaire, dans un four tubulaire rotatif ou dans un four à micro-ondes ou dans un réacteur à lit fluidisé.

8. Procédé selon les revendications 1 à 7, **caractérisé en ce qu'**on met en oeuvre la calcination à des températures inférieures à 1100 °C.

9. Procédé selon les revendications 1 à 8, **caractérisé en ce qu'**on met en oeuvre la calcination à 700 à 1100 °C.

10. Procédé selon les revendications 1 à 6, 8, **caractérisé en ce qu'**on injecte directement dans l'appareillage de calcination la suspension aqueuse de chlorhydrate d'aluminium et de germes sans élimination préalable de l'eau.

11. Procédé selon les revendications 1 à 10, **caractérisé en ce qu'**on met en oeuvre le traitement thermique en 0,5 à 10, en particulier en 2 à 5 minutes.

12. Procédé selon les revendications 1 à 11, **caractérisé en ce qu'**on broie, par un broyage à l'état humide ou à sec, au cours d'une étape subséquente, les agglomérats formés lors de la réaction de traitement thermique.

13. Procédé selon les revendications 1 à 12, **caractérisé en ce qu'**on détruit les agglomérats par des ultrasons.

14. Procédé selon les revendications 1, 2, 12, 13, **caractérisé en ce qu'**on désagglomère les agglomérats à 20 à 90 °C.

15. Procédé selon les revendications 1, 2, 12, 13, 14, **caractérisé en ce qu'**on convertit en une forme comprenant des agglomérats mous, par séchage par atomisation, par lyophilisation ou par d'autres procédés de séchage, les suspensions obtenues lors de la désagglomération.

16. Procédé selon les revendications 1, 2, 13, 14, 15, **caractérisé en ce qu'**on centrifuge les suspensions obtenues lors de la désagglomération, et qu'on sépare les surnageants, limpides à légèrement opalescents, comprenant des nanoparticules < 20 nm.

17. Procédé selon la revendication 16, **caractérisé en ce qu'**on sèche les suspensions, obtenues après la centrifugation, comprenant des nanoparticules < 20 nm, et qu'on forme alors par séchage par atomisation, par lyophilisation ou par d'autres procédés de séchage, une poudre facilement redispersible.
